# EUROPEAN PATENT APPLICATION

(11) **EP 2 319 744 A2**
(43) Date of publication of application: **11.05.2011**
(21) Application number: 10188608.3
(22) Date of filing: 22.10.2010
(51) Int. Cl.: B62B 3/00, B62B 5/06

(54) **Transport cart**

(30) Priority: 22.10.2009 NL 2003691
(71) Applicant: Matador Exploitatie B.V., 5268 AS Helvoirt (NL)
(72) Inventor: Belgers, Paul Anton Gerard Marie, 5263 GP Vught (NL); Peereboom, Kornelis Jan, 2082 BS Santpoort Zuid (NL)
(74) Representative: Eveleens Maarse, Pieter

(57) **Abstract**

The invention relates to a transport cart (1). The transport cart (1) is provided with a frame (2) with carrier for supporting objects to be transported; and three wheel-bearing shafts (3a,3b,3c) connected at a mutual distance to the frame (2), wherein the position of at least one wheel (4) of the central wheel-bearing shaft furthest away from the carrier is situated at a greater distance from the carrier than the positions of the wheels (3) of the outer wheel-bearing shafts furthest away from the carrier.

## Description

The present invention relates to a transport cart provided with a frame with support structure for supporting objects to be transported.

The most common transport carts are provided with a carrying platform, a tray or a holder on which or in which objects to be transported can be placed. A clear example of such a transport cart without further superstructure and provided with two wheel-bearing shafts connected to a frame at a mutual distance is a "dolly" and finds application in, among others, the removals industry and in the delivery and removal of heavier items such as for instance white goods, pianos and the like. Although such transport carts have been used successfully for a long time, they have the drawback that they can be employed less effectively if the ground surface is provided with unevenness such as for instance thresholds and (pavement) kerbs. In order to still move the transport cart over the unevenness the transport cart must normally be tilted. This is possible for instance in that a user lifts the carrying platform on one side (optionally with a rope arranged for this purpose), this causing a physically heavy load. A second drawback of the known transport cart with two wheel shafts placed at a mutual distance is that the wheels are generally castors for the purpose of thus allowing the transport cart to be easy to turn, with the drawback however that over linear transport paths the transport cart generally does not track well and travels with difficulty Depending on the application, this can be irksome. An alternative to the transport cart without further superstructure and with two wheel-bearing shafts is the wheelbarrow, wherein a holder (wheelbarrow tray) is supported by a single wheel-bearing shaft. The advantage of a single wheel-bearing shaft with a single wheel is that it makes the wheelbarrow very easy to manoeuvre, although it does have the drawback that during transport a part of the load for displacing must be lifted via the handles A third alternative according to the prior art relates to the so-called "hand-truck", wherein a carrying platform with upstand is supported by a single wheel-bearing shaft with two spaced-apart wheels. A hand-truck is also relatively easy to manoeuvre, although also in the case of the hand-truck a part of the load for displacing must be lifted via the handles.

The present invention has for its object to provide an improved transport cart, wherein the above stated drawbacks are present at least to a lesser extent.

For this purpose the invention provides a transport cart comprising: a frame with carrier for supporting objects to be transported and three wheel-bearing shafts connected at a mutual distance to the frame, wherein the position of at least one wheel of the central wheel-bearing shaft furthest away from the carrier is situated at a greater distance from the carrier than the positions of the wheels of the outer wheel-bearing shafts furthest away from the carrier. At rest the transport cart is supported by the wheel/the wheels of the central wheel-bearing shaft and by the wheel/the wheels of one of the two outer wheel-bearing shafts. Because a contact position (contact surface) with the bottom of the wheel/the wheels of the central wheel-bearing shaft lies at a greater distance from the carrier than the positions of the wheels of the outer shafts lying furthest away from the carrier, the outer wheel-bearing shaft of the transport cart which is loaded can be changed by swivelling around the central shaft. The wheels of the outer wheel shafts can thus be lifted very easily. The wheel/the wheels of the thus lifted shaft are thus situated at a distance from the ground, whereby the transport cart can be moved relatively easily onto or over an uneven surface on this lifted side. If the wheel/the wheels of the central shaft then come into contact with the uneven surface, the transport cart can once again be swivelled through a limited a angle around the central wheel-bearing shaft, whereby a switching of the outer shafts takes place; after the swivelling the outer shaft which has already been moved onto or over the uneven surface is loaded. The outer shaft which has not yet passed over the uneven surface is lifted, with the result that the wheel/the wheels thereof move clear of the ground and the transport cart can easily be moved further in its entirety onto or over the uneven surface. By swivelling the transport cart about the central wheel-bearing shaft the transport cart can also be positioned such that the wheels of the two outer shafts move clear of the ground. In this position the transport cart can be rotated in simple manner, the transport cart thus supporting here on only the central wheel-bearing shaft. A small turning circle is thus obtained.

It is possible to embody the wheels with different diameters, more particularly such that the wheels of the central wheel shaft are larger than the wheels of the outer wheel shafts. Another option is that the wheels have substantially the same diameter and the central wheel-bearing shaft is situated at a greater distance from the carrier than the outer wheel-bearing shafts. This second embodiment variant has the advantage that all wheels can be identical, which has advantages in both production and maintenance.

The distance between the position of at least one wheel of the central wheel-bearing shaft furthest away from the carrier and the positions of the wheels of the outer wheel-bearing shafts furthest away from the carrier can be varied as desired. This difference lies particularly between 4 and 15 centimetres. A transport cart is hereby provided which can be easily moved over or onto uneven surfaces in our daily surroundings and wherein at rest the frame for the objects to be transported encloses only a small angle with the horizontal, whereby there is a low risk of objects moving off the carrier under the influence of gravity.

It is not precluded that a wheel of a wheel-bearing shaft is formed by a roller. It is however recommended that a shaft is provided with a single wheel or with two wheels at a mutual distance. Two wheels also give the transport cart stability here in the longitudinal direction of the shaft.

Two mutually adjacent wheels can also be connected to at least the central wheel-bearing shaft. A transport cart is hereby provided wherein a good stability is combined with a good manoeuverability. This is because the two wheels extend over a greater width than a single wheel, thereby increasing stability, while the transport cart has a small turning circle because the wheels are mutually adjacent and are in particular independently rotatable.

Possible wheels of at least the central wheel-bearing shaft are preferably rotatable independently of each other. This simplifies turning of the transport cart around a vertical axis The spaced-apart, independently rotatable wheels of the central wheel-bearing shaft must after all rotate in different directions during turning of the transport cart, although this also makes it possible for them to rotate at different angular speeds, for instance when negotiating a bend.

In another embodiment only one wheel is connected to the central wheel-bearing shaft. A transport cart is hereby provided in which a good stability is combined with an improved manoeuverability. Because only one wheel is connected to the central wheel-bearing shaft, the turning circle is even smaller. The transport cart can essentially be turned about a point of rotation or plane of rotation without the wheel rotating about its shaft. A user can hereby turn the transport cart in a very small space. If in this embodiment two wheels are connected to the other two shafts, optionally at a mutual distance or against each other, the transport cart is supported by three wheels in a rest position, in which the transport cart is supported by the wheel connected to the central shaft and a pair of wheels of an outer shaft, whereby the transport cart is supported in stable manner in the rest position.

It is also possible for only one wheel to be connected to each of the wheel-bearing shafts. Not only does this make the transport cart lighter, whereby a user can transport more transport weight, it also makes the transport cart flexible in use. This is because the transport cart can easily be tilted laterally in order to unload the transport cart. The transport cart particularly comprises a boundary for objects to be transported. This reduces the risk of objects to be transported falling off the transport cart during transport or in a rest position. The boundary can take diverse forms. The boundary can be formed by a construction forming part of the frame and extending from the part of the frame located on the side of the carrier directed toward the wheels to a position at least beyond the carrier. The part of the construction extending on the side of the carrier remote from the wheels here forms a boundary for objects to be transported. The boundary can also be formed by a housing or bin extending from the frame or the carrier, wherein the housing defines a receiving space for objects to be transported and is provided with an opening for placing objects to be transported in the receiving space. A particular example hereof is a transport cart according to the present invention which is provided with a "wheelbarrow tray", for instance of metal or plastic, so that the transport cart is a wheelbarrow. The wheelbarrow tray can take a random form here, such as for instance a traditional wheelbarrow tray, a tipper wheelbarrow tray, a shovel wheelbarrow tray, a stable wheelbarrow tray and so on. Other options are to embody a brick cart, a window cart or a tool cart according to the invention with three wheel-bearing shafts connected at mutual distance to the frame, so that they also form part of the present invention. It is noted here that a wheelbarrow tray can also fulfill the function of the frame because the wheel shafts are supported by the wheelbarrow tray, which means that the wheelbarrow tray can be deemed a frame in such a situation.

In another embodiment the wheels of at least the central wheel-bearing shaft are connected to a rigid shaft. This is a structurally simple solution. In another embodiment the transport cart comprises an arm for the user to exert a force on the transport cart. This improves the convenience of use of the transport cart. The arm can be used to exert a force on the transport cart for moving the transport cart, for instance a pushing or pulling force.

The arm can herein be rigidly connected to the frame. The arm is preferably connected movably to the frame. A user of the transport cart can here adopt an ergonomically desirable posture.

In an embodiment the arm is movable between a storage position, in which the arm extends substantially within the frame, and an active position in which the arm extends substantially outside the frame. The transport cart can hereby be stowed away compactly during storage and the transport cart can also be used efficiently.

In another embodiment the arm extends in the active position substantially outside the surface of the carrier projected onto a ground surface. A user of the transport cart can hereby assume an improved ergonomic posture.

In yet another embodiment the transport cart comprises at least one blocking for blocking the arm in at least one desired position. This improves the convenience of use of the transport cart and makes it possible (when the blocked position is an outward pivoted position) to use the arm as a lever when passing over unevenness in the ground; swivelling of the frame around the central wheel-bearing shaft thus becomes even easier.

In an advantageous embodiment the blocking is adapted to block the arm in an active position. Making use of the arm a user can hereby apply a torque relative to a wheel-bearing shaft in simple manner, wherein only a limited strength is needed. This because the arm is blocked and will transmit the torque exerted on the arm to the transport cart. In order to impart an increased friction to the objects to be transported the carrier is provided with a material layer manufactured substantially from polyurethane. The risk of objects moving off the carrier under the influence of gravity is hereby small.

The carrier can also be at least partially provided with a layer having a texture. This also reduces the risk of an object to be transported supported by the frame moving off the frame under the influence of gravity.

The invention also comprises a transport cart, comprising: a frame with carrier for objects to be transported; and three wheel-bearing shafts connected to the frame at a mutual distance, wherein the position of the central wheel furthest away from the carrier is situated at a distance and on the side remote from the carrier of the line between the positions of the wheels of the outer wheel-bearing shafts furthest away from the carrier at the position where the line intersects the central wheel. With this variant of the transport cart according to the present invention wheelbarrows also form part of the invention, wherein the carrier has a complex shape but wherein the three wheels still enable two stable transport positions, i.e. a forward tilted stable position and a rearward tilted stable position, without the distance between the wheel shafts and the carrier here meeting the above stated condition.

The present invention will be further elucidated on the basis of the non-limitative exemplary embodiments shown in the following figures. Herein:
figure 1 shows a perspective view of a transport cart according to the present invention, wherein an arm is in the storage position;
figure 2 shows a perspective view of the transport cart of figure 1, wherein the arm is in an active position;
figure 3 shows a perspective view of the transport cart of figure 1, wherein the arm is in another active position;
figure 4 shows a perspective view of the transport cart of figure 1, wherein the transport cart is provided with a carrier; and
figure 5 shows a cross-section of an embodiment of the transport cart according to the present invention.

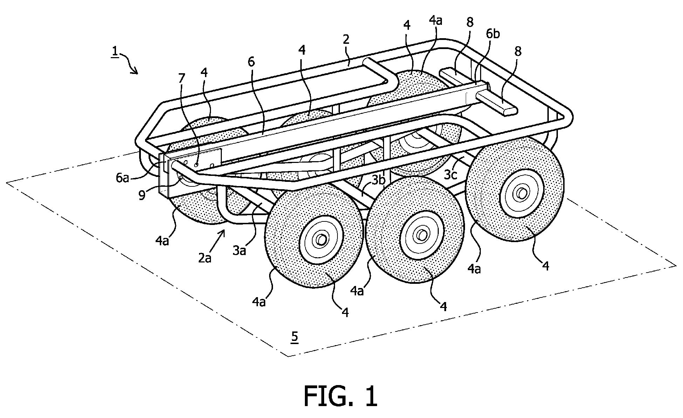

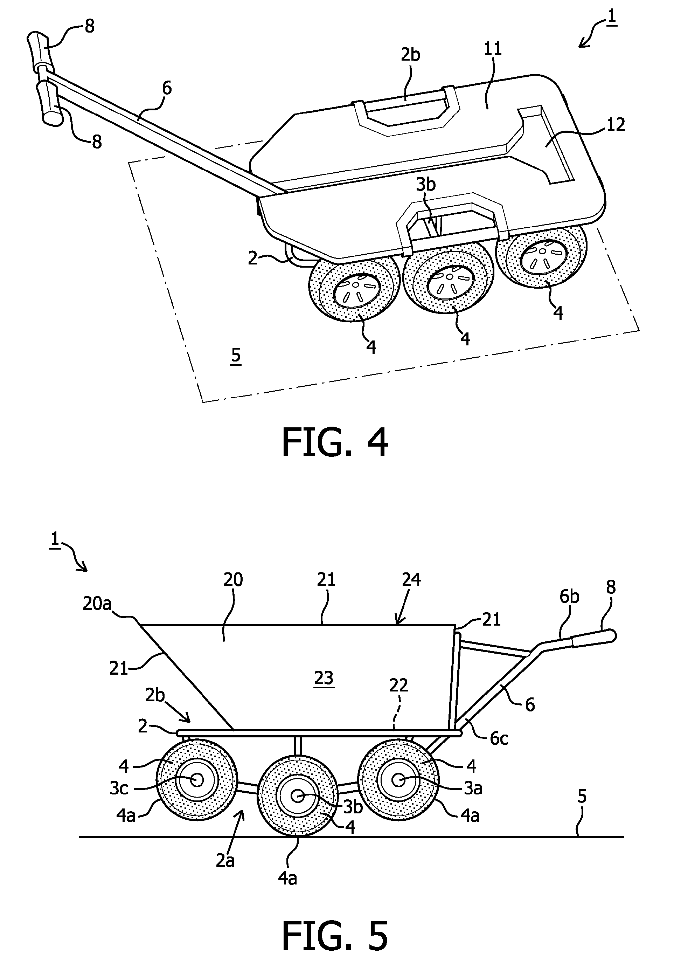

A transport cart designated as a whole with 1 is shown with reference to figure 1. Transport cart 1 comprises a frame 2 constructed from a tube system. Connected to an underside 2a of frame 2 are three wheel-bearing shafts 3a,3b,3c, i.e. a central wheel-bearing shaft 3b and two outer wheel-bearing shafts 3a,3c situated on either side of central wheel-bearing shaft 3b. Shafts 3a,3b,3c are provided on either side with wheels 4. The tread 4a of wheels 4 is manufactured from a rubber and wheels 4 are filled with a foam, whereby wheels 4 can still be used even in the case of damage to tread 4a. On the upper side 2b of frame 2 transport cart 1 is provided with a carrier (see also figure 4). The positions of contact surfaces 4a with the ground 5 of wheels 4 of central wheel-bearing shaft 3b furthest away from the carrier are situated at a greater distance from the carrier than contact surfaces 4a of wheels 4 of the outer wheel-bearing shafts 3a,3c. Transport cart 1 further comprises an arm 6 connected to frame 2 for pivoting about a shaft 7 at a first outer end 6a. In this figure arm 6 is in a storage position, wherein arm 6 lies wholly in the frame. Arm 6 comprises protrusions 8 at a second outer end 6b with which a user can grasp arm 6. Transport cart 1 also comprises a blocking 9 for blocking the arm 6 in desired positions.

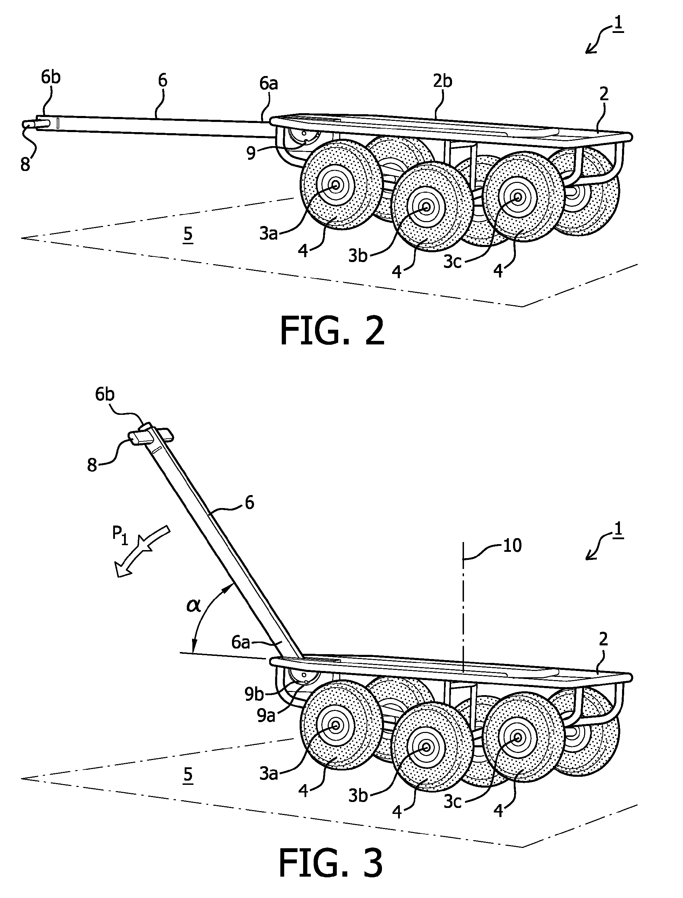

Figure 2 shows transport cart 1 of figure 1, wherein arm 6 is in an active position. Arm 6 extends here substantially parallel to the upper surface 2b of frame 2 defined by the tube system of frame 2. Arm 6 rests here on a stop (not shown).

Figure 3 shows transport cart 1 of figure 1, wherein arm 6 is in an active position, wherein arm 6 encloses an upward angle V relative to the upper surface 2b of frame 2 defined by the tube system of frame 2. In this position a user can use transport cart 1 in ergonomically attractive positions. Arm 6 is locked in this active position by placing a displaceable pin 9a of blocking 9 into a recess 9b of blocking 9. A user can exert a torque relative to arrow P1, whereby transport cart 1 will turn about wheel-bearing shaft 3b. Wheels 4 of wheel-bearing shaft 3a will here be urged onto ground surface 5 and wheels 4 of wheel-bearing shaft 3c will be urged upward, away from ground surface 5. Transport cart 1 can hereby be moved easily onto or over an unevenness such as a pavement (not shown). A user can also balance transport cart 1 round wheel-bearing shaft 3b using arm 6 such that wheels 4 of wheel-bearing shaft 3a and wheels 4 of wheel-bearing shaft 3c are held a distance from the ground 5, as is shown in this figure. In this situation a user can turn transport cart 1 in simple manner about a perpendicular axis 10, wherein transport cart 1 has a relatively small turning circle.

Figure 4 shows transport cart 1 of figure 1, wherein a carrier or carrying platform 11 is mounted on upper side 2b of frame 2, which carrying platform 11 is manufactured from polyurethane (TPU) and which carrying platform 11 is provided with a texture on the side carrying objects to be transported. This carrying platform 11 thus forms the carrier of transport cart 1, although it is also possible to embody transport cart 1 without carrying platform; frame 2 then forms the direct carrier on upper side 2. Carrying platform 11 is provided with a recess 12 for receiving arm 6 in the storage position.

An embodiment of a transport cart designated as a whole with 1 is shown with reference to figure 5. Transport cart 1 comprises a frame 2 constructed from a tube system. Connected to an underside 2a of frame 2 are three wheel-bearing shafts 3a,3b,3c, i.e. a central wheel-bearing shaft 3b and two outer wheel-bearing shafts 3a,3c situated on either side of central wheel-bearing shaft 3b. In the embodiment shown here shafts 3a,3b,3c are each provided with only a single wheel 4. The wheels correspond with the wheels as described in figure 1, although other wheels can also be envisaged. On the upper side 2b of frame 2 transport cart 1 is provided with a housing 20, which is constructed from walls 21 and a carrier embodied as a bottom plate 22. The housing encloses a receiving space 23 for objects to be transported. On an upper side 20a thereof, i.e. on the side of housing 20 remote from the frame, the housing comprises an opening 24 for providing access to receiving space 23. The position of contact surface 4a with ground surface 5 of wheel 4 of central wheel-bearing shaft 3b situated furthest from the ground surface is a greater distance from the carrier than contact surfaces 4a of wheels 4 of the outer wheel-bearing shafts (3a,3c). Transport cart 1 further comprises an arm 6 connected to frame 2 at a first end 6c. At a second outer end 6b arm 6 comprises protrusions 8 with which a user can grasp arm 6.

## Claims

1. Transport cart, comprising:
- a frame with carrier for objects to be transported; and
- three wheel-bearing shafts connected at a mutual distance to the frame, wherein the position of at least one wheel of the central wheel-bearing shaft furthest away from the carrier is situated at a greater distance from the carrier than the positions of the wheels of the outer wheel-bearing shafts furthest away from the carrier.

2. Transport cart as claimed in claim 1, **characterized in that** the wheels have substantially the same diameter and the central wheel-bearing shaft is situated at a greater distance from the carrier than the outer wheel-bearing shafts.

3. Transport cart as claimed in claim 1 or 2, **characterized in that** the difference between the distance of the position of at least one wheel of the central wheel-bearing shaft furthest away from the carrier and the positions of the wheels of the outer wheel-bearing shafts furthest away from the carrier is 4 to 15 centimetres.

4. Transport cart as claimed in any of the foregoing claims, **characterized in that** two wheels located at a mutual distance are connected to at least the central wheel-bearing shaft.

5. Transport cart as claimed in any of the claims 1-3, **characterized in that** two mutually adjacent wheels are connected to at least the central wheel-bearing shaft.

6. Transport cart as claimed in claim 4 or 5, **characterized in that** the wheels of at least the central wheel-bearing shaft are rotatable independently of each other.

7. Transport cart as claimed in any of the claims 1-3, **characterized in that** only one wheel is connected to the central wheel-bearing shaft.

8. Transport cart as claimed in claim 7, **characterized in that** only one wheel is connected to each of the wheel-bearing shafts.

9. Transport cart as claimed in any of the foregoing claims, **characterized in that** at least one wheel of at least the central wheel-bearing shaft is connected to a rigid shaft.

10. Transport cart as claimed in any of the foregoing claims, **characterized in that** the transport cart comprises an arm for the user to exert a force on the transport cart.

11. Transport cart as claimed in claim 10, **characterized in that** the arm is connected movably to the frame and that the arm is movable between a storage position, in which the arm extends substantially within the frame, and an active position in which the arm extends substantially outside the frame.

12. Transport cart as claimed in claim 11, **characterized in that** the arm extends in the active position substantially outside the surface of the carrier projected onto a ground surface.

13. Transport cart as claimed in either of the claims 11 or 12, **characterized in that** the transport cart comprises at least one blocking for blocking the arm in at least one desired position.

14. Transport cart as claimed in claim 13, **characterized in that** the blocking is adapted to block the arm in an active position.

15. Transport cart as claimed in any of the foregoing claims, **characterized in that** the carrier is provided on the carrying side with a material layer manufactured substantially from polyurethane and/or with a layer with a texture.

16. Transport cart, comprising:
- a frame with carrier for objects to be transported; and
- three wheel-bearing shafts connected to the frame at a mutual distance, wherein the position of the central wheel furthest away from the carrier is situated at a distance and on the side remote from the carrier of the line between the positions of the wheels of the outer wheel-bearing shafts furthest away from the carrier at the position where the line intersects the central wheel.
